# EUROPEAN PATENT SPECIFICATION

(11) **EP 0 787 100 B1**
(45) Date of publication and mention of the grant of the patent: **17.07.2002**
(21) Application number: 95900446.6
(22) Date of filing: 28.10.1994
(51) Int. Cl.: B65D 33/01, B65D 81/26, A47J 43/24

(54) **VEGETABLE DRAINING AND STORAGE BAG**
BEUTEL ZUM AUFBEWAHREN UND TROCKENSCHLEUDERN VON GEMÜSEN
SACHET D'EGOUTTAGE ET DE STOCKAGE DES LEGUMES

(43) Date of publication of application: 06.08.1997
(73) Proprietor: Goldman, Robert I., San Diego, CA 92120 (US)
(72) Inventor: Goldman, Robert I., San Diego, CA 92120 (US)
(74) Representative: Riebling, Peter, Dr.-Ing.
(86) International application number: US9412324
(87) International publication number: WO9613440

(56) References cited:
- EP-A- 0 275 350
- FR-A- 1 170 658
- GB-A- 926 657
- US-A- 2 001 149
- US-A- 2 163 324
- US-A- 2 688 914
- US-A- 2 789 728
- US-A- 2 998 340
- US-A- 3 159 096
- US-A- 3 171 581
- US-A- 4 715 963

## Description

### Field of the Invention

This invention relates to devices for draining and storing washable goods and more particularly to devices for removing excess water from salads and storing salads.

### Background of the Invention

Salad spinners are well-known devices for removing excess water from washable goods such as vegetables. Many operate using the same principle employed in clothes washers. The device typically comprises a cylindrical container with holes through the walls into which is placed the washable material. After rinsing, excess water or other cleaning fluid is removed by spinning the container, subjecting the contents to centrifugal forces. This forces the water to the periphery of the container where it slips through the holes.

Since these devices spin at a relatively high angular velocity, the structure of the container is usually constructed of a strong, rigid material such as metal or plastic so that it will maintain its circular shape while spinning and not wobble. This rigid, non-collapsible container structure, even if removable from the spinning mechanism, is quite bulky. When used for storage, it takes up a considerable amount of the limited room available in a refrigerator or in its vegetable drawer.

The storage of vegetables in an air-tight environment is also desirable to maintain their freshness. Typical salad spinners are not air-tight and therefore unsuitable for storing vegetables long-term. An alternative is removing the salad from the spinner and storing the salad in the refrigerator in a plastic bag. This can be inconvenient. In general, typical salad spinners do not provide a practical refrigerated vegetable storage receptacle.

Salad spinners are relatively expensive. They generally require additional mechanisms and/or attachments for implementing the spinning feature. This necessarily adds to the intricacy and therefore, expense of the overall product. Because of their relative expense, current salad spinners are not economically disposable. Disposability of a storage container for sanitary and convenience reasons is still an asset with today's consumers who are still tenaciously grasping onto the "throw-away" mentality. It would be desirable therefore, to have a device which drains excess water from washable goods and which stores them in a disposable collapsible airtight container.

A draining bag is shown in GB 926,657. The bag is formed of water-impermeable, heat-sealable, flexible plastic having an open end with closure means and sealed areas near the bottom defining passageways for water, for use in removing surplus water from wet solid articles. No fluid separated draining means is disclosed by which the drained water is removable from the bag without getting into contact with the drained solid articles again, or without first emptying the bag of the drained solid articles, thereby causing the possibility of contamination.

### Summary of the Invention

The principal and secondary objects of this invention are to provide a simple, inexpensive, collapsible and disposable device for draining and storing washable goods. These and other objects are achieved by a bag having a storage chamber dimensioned to accept the washable goods of interest, a reservoir positioned beneath the storage chamber and connected to the storage chamber through a series of apertures. When the user revolves the bag, the excess water is driven down away from the washable goods through the apertures and into the reservoir. A channel extending up the side of the bag provides a means for draining the reservoir prior to sealing the bag for storage.

More specifically, the purposes of the invention are satisfied by a device according to claim 1 for draining vegetables and other washable goods which comprises a bag made of pliable sheet material, said bag defining a chamber having an open top and a sealed bottom and sealed lateral edges, and a reservoir formed along the bottom edge and separated from the chamber by a permeable barrier, further having a fluid draining channel, running from said reservoir toward said open top, characterised in that the fluid draining channel is separated from the chamber and is terminating at an end located at or just below the edges of the top of the bag.

### Brief Description of the Drawing

**Figure 1** is a transparent depiction of the bag.

**Figure 2** is a transparent depiction of the bag having a sealing means built in.

### Description of the Preferred Embodiment of the Invention

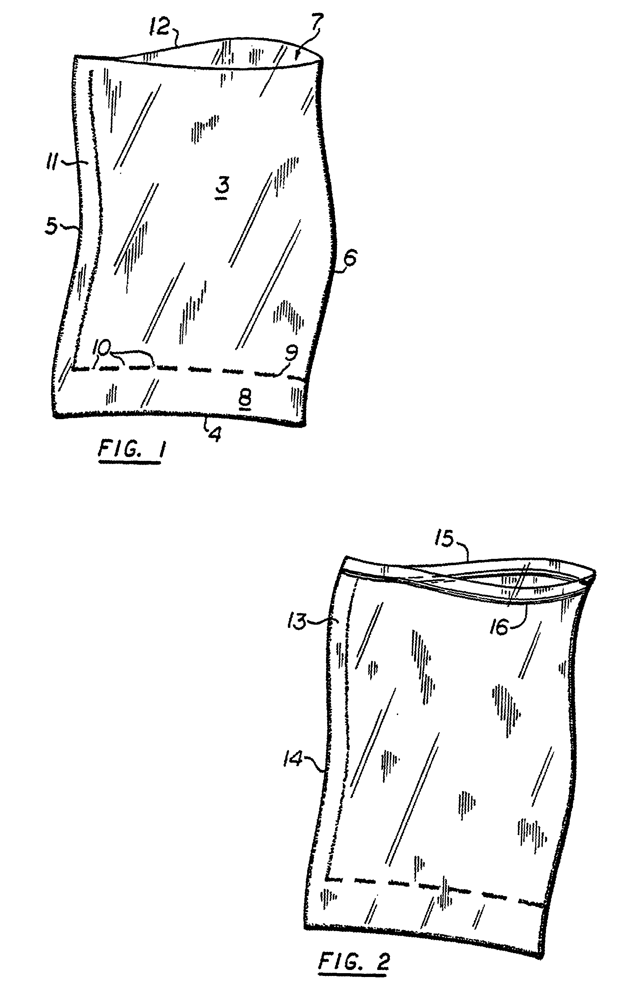

Referring now to the drawing, Figure **1** shows a draining and storage bag made of a pliable, non-soluble sheet material such as plastic. The bag has a main storage chamber **3** formed by two substantially planar and substantially parallel sheets which are connected along three sides, the bottom **4**, and two lateral edges **5** and **6** leaving an opening **7** at the top of the bag. The main storage chamber **3** is sized and dimensioned to accept the washable goods of interest. Adjacent to the chamber is a reservoir **8** for collecting fluids being drained from the goods in the chamber. The reservoir is separated from the chamber by a fluid permeable barrier **9.** In this case the barrier is formed by an intermittent seal having a plurality of apertures **10** sized and dimensioned to allow passage of fluid therethrough connecting the chamber to the reservoir. Once the excess fluid is located in the reservoir it may be drained from the reservoir through a channel **11** positioned adjacent to the chamber and running from the reservoir up to the top of the bag.

In order to drive the excess fluid down into the reservoir, the user can grasp the top **12** of the bag an revolve it in a circular motion, thereby generating centrifugal forces on the contents.

A typical sequence which utilizes the bag involves the user placing pre-washed or unwashed goods into the chamber. The user may then add a washing fluid such as water to the main storage chamber of the bag, close off the top with the squeeze of a hand or by other means and agitate it, thereby washing the goods. The user then grasps a portion of the bag near the top and revolves the bag in a lasso-type motion, thereby driving the fluid from the chamber through the apertures into the reservoir by centrifugal force. The user then tips the bag on end with the channel side down, thereby pouring the fluid from the reservoir through the channel and out the top of the bag. The user may then collapse the bag around the goods thereby driving out any excess air in the bag, then seal the top of the bag to provide a substantially airtight container for storing in a refrigerator.

An advantage of this product is that it can be made very inexpensively using a single stamping and heat sealing process which is ordinarily used to create plastic bags. The seals forming the edges of the bag and boundaries between the chamber and the reservoir and between the chamber and the channel can be formed at the same time as when the bag is cut from two parallel sheets of plastic that are run together in a face-to-face configuration. Alternatively, the material used to form the bag may consist of one sheet of folded, laminated plastic.

In an alternate embodiment as seen in Figure 2, the top **13** of the channel **14** at the top of the bag terminates just below the top edge **15** of the bag so that a single tongue and groove releasable locking strip **16** such as those sold under the brand name ZIPLOCK may be used to seal the top of the bag.

Other embodiments may provide alternate means for sealing the top of the bag. These include attached or unattached wire twist ties, plastic belts or clasps, cinch-tops and bread-style plastic chokers and many other means well known in the art.

## Claims

1. A device for draining vegetables and other washable goods which comprises:
a bag made of pliable sheet material, said bag defining a chamber (3) having an open top (7) with an upper edge (12, 15), a sealed bottom (4) and sealed lateral edges (5, 6),
and a reservoir (8) formed along the bottom edge (4) and separated from the chamber (3) by a fluid permeable barrier (9),
and a fluid draining channel (11, 14) running from said reservoir (8) toward said open top (7),
**characterised in that**
the fluid draining channel (11, 14) is separated from the chamber (3) and terminates at an end (13) located at or just below the edges (12, 15) of the top (7) of the bag.

2. The device according to claim 1, **characterised in that** the device further comprises means (16) for releasably sealing said open top (7).

3. The device according to one of claims 1 or 2, **characterised in that**
said bag is formed of first and second substantially planar sheets having substantially the same dimensions, said sheets being positioned in a parallel, face-to-face configuration and connected along the common bottom (4), along the common first lateral side (5), along the common second lateral side (6), and not permanently connected along the top (7);
a first connection between said first and second sheets extending vertically along and parallelly spaced apart from said first side, said first connection having an upper end (13) terminating at or just below the edges (12, 15) of the top (7), said first connection having a lower end and terminating in the reservoir (8), thereby creating said channel (11) extending along one side of said bag; and
a second connection having a first end, terminating away from said first lateral side (5), and a second end, terminating away from said second lateral side (6), thereby creating said reservoir (8) extending along said bottom (4) of said bag.

4. The device according to one of claims 1 to 3, **characterised in that** said bag comprises two substantially symmetrical sheets of non-soluble waterproof material continuously sealed together in a face-to-face configuration along the bottom edge (4) and two lateral edges (5, 6), said sheets being intermittently sealed together along a first line substantially parallel and spaced apart from said bottom edge (4) and extending between the lateral edges (5, 6), to define the bottom reservoir (8), and continuously sealed together along a second line substantially parallel and spaced apart from one of said lateral edges (5, 6), extending between the bottom reservoir (8) and at or just below the edges (12, 15) of the top (7), to define the fluid draining channel (11).

## Patentansprüche

1. Eine Vorrichtung zum Trockenschleudern von Gemüse und anderen waschbaren Gütern, welche beinhaltet:
einen Beutel aus biegsamem Folien-/Blattmaterial, wobei der Beutel eine Kammer (3) definiert, die eine offene Oberseite (7) mit einem oberen Rand (12, 15), einen geschlossenen Boden (4) und geschlossene Seitenränder (5, 6) hat,
und ein Reservoir (8), das entlang des Bodenrandes (4) gebildet ist und von der Kammer (3) durch eine für Flüssigkeit durchlässige Barriere (9) getrennt ist,
und einen Flüssigkeits-Ableit-Kanal (11, 14), der von dem Reservoir (8) in Richtung der offenen Oberseite (7) verläuft,
**dadurch gekennzeichnet, dass**
der Flüssigkeits-Ableit-Kanal (11, 14) von der Kammer (3) getrennt ist und an einem Ende (13) mündet, welches an den Rändern (12, 15) oder kurz unterhalb der Ränder (12, 15) der Oberseite (7) des Beutels angeordnet ist.

2. Die Vorrichtung nach Anspruch 1, **dadurch gekennzeichnet, dass** die Vorrichtung weiterhin Mittel (16) zum lösbaren Versiegeln der offenen Oberseite (7) beinhaltet.

3. Die Vorrichtung nach einem der Ansprüche 1 oder 2, **dadurch gekennzeichnet, dass** der Beutel aus ersten und zweiten im Wesentlichen ebenen Folien/Blättern gebildet ist, welche im Wesentlichen gleiche Dimensionen haben, wobei diese Folien/Blätter in einer parallelen, sich gegenüber liegenden Konfiguration positioniert sind und entlang des gemeinsamen Bodens (4), entlang der gemeinsamen ersten lateralen Seite (5) und entlang der gemeinsamen zweiten lateralen Seite (6) miteinander verbunden sind, und nicht permanent entlang der Oberseite (7) miteinander verbunden sind;
und der Beutel weiterhin gebildet ist aus einer ersten Verbindung, die sich zwischen der ersten und der/dem zweiten Folie/Blatt sich vertikal entlang und parallel beabstandet von der ersten Seite erstreckt, wobei diese erste Verbindung ein oberes Ende (13) hat, das an den Rändern (12, 15) oder kurz unterhalb der Ränder (12, 15) der Oberseite (7) endet, und wobei diese erste Verbindung ein unteres Ende hat, das in dem Reservoir (8) endet, und dabei den besagten Kanal (11) erzeugt, der sich entlang einer Seite des Beutels erstreckt; und
der Beutel weiterhin gebildet ist aus einer zweiten Verbindung mit einem ersten Ende, das von der ersten lateralen Seite (5) entfernt endet, und mit einem zweiten Ende, das von der zweiten lateralen Seite (6) entfernt endet, und dabei das Reservoir (8) erzeugt wird, welches sich entlang des Bodens (4) des Beutels erstreckt.

4. Die Vorrichtung gemäß einem der Ansprüche 1 bis 3, **dadurch gekennzeichnet, dass** der Beutel zwei im Wesentlichen symmetrische Folien/Blätter aus für Wasser nicht löslichem und undurchlässigem Material beinhaltet, welche un-unterbrochen in einer sich gegenüber liegenden Konfiguration entlang des Bodenrandes (4) und zwei lateraler Seiten (5, 6) miteinander verbunden sind, wobei die Folien/Blätter unterbrochen entlang einer ersten Linie miteinander verbunden sind, die im Wesentlichen parallel und beabstandet von dem Bodenrand (4) ist und sich zwischen den seitlichen Rändern (5, 6) erstreckt, um das Bodenreservoir (8) zu definieren, und die Folien/Blätter un-unterbrochen entlang einer zweiten Linie miteinander verbunden sind, die im Wesentlichen parallel und beabstandet von den seitlichen Rändern (5, 6) ist und sich zwischen dem Bodenreservoir (8) bis an oder kurz unter die Ränder (12, 15) der Oberseite (7) erstreckt, um den Flüssigkeits-Ableit-Kanal (11) zu definieren.

## Revendications

1. Dispositif pour égoutter des légumes et autres produits lavables, qui comprend :
un sachet composé d'un matériau en feuille pliable, ledit sachet définissant une chambre (3) qui présente une partie supérieure ouverte (7) avec un bord supérieur (12, 15), un fond scellé (4) et des bords latéraux scellés (5, 6),
un réservoir (8) formé le long du bord inférieur (4) et séparé de la chambre (3) par une barrière (9) perméable aux fluides,
et un conduit d'écoulement de fluide (11, 14) qui part du réservoir (8) et qui s'étend vers la partie supérieure ouverte (7),
**caractérisé en ce que** le conduit d'écoulement de fluide (11, 14) est séparé de la chambre (3) et se termine à une extrémité (13) située au niveau ou juste au-dessous des bords (12, 15) de la partie supérieure (7) du sachet.

2. Dispositif selon la revendication 1, **caractérisé en ce qu'**il comporte également des moyens (16) pour sceller de manière amovible la partie supérieure (7).

3. Dispositif selon la revendication 1 ou 2, **caractérisé en ce que** le sachet se compose d'une première feuille et d'une seconde feuille pratiquement planes et pratiquement de mêmes dimensions, ces feuilles étant placées parallèlement, l'une en face de l'autre, et reliées le long du fond commun (4), du premier côté latéral commun (5) et du second côté latéral commun (6), tandis qu'elles sont reliées de manière non permanente le long de la partie supérieure (7) ;
une première liaison entre les première et seconde feuilles s'étendant à la verticale le long du premier côté, parallèlement à celui-ci et à une certaine distance de celui-ci, laquelle première liaison a une extrémité supérieure (13) qui arrive au niveau ou juste au-dessous des bords (12, 15) de la partie supérieure (7), et une extrémité inférieure qui arrive dans le réservoir (8), définissant ainsi le conduit (11) qui longe un côté du sachet ; et
une seconde liaison ayant une première extrémité qui se termine loin du premier côté latéral (5), et une seconde extrémité qui se termine loin du second côté latéral (6), définissant ainsi le réservoir (8) qui longe le fond (4) du sachet.

4. Dispositif selon l'une des revendications 1 à 3, **caractérisé en ce que** le sachet comprend deux feuilles pratiquement symétriques en matériau non soluble et imperméable à l'eau qui sont scellées ensemble de manière continue, l'une en face de l'autre, le long du bord inférieur (4) et des deux bords latéraux (5, 6), ces feuilles étant scellées ensemble de manière discontinue le long d'une première ligne qui est pratiquement parallèle au bord inférieur (4), à une certaine distance de celui-ci, et qui s'étend entre les bords latéraux (5, 6) pour définir le réservoir inférieur (8), et scellées ensemble de manière continue le long d'une seconde ligne qui est pratiquement parallèle à l'un des bords latéraux (5, 6), à une certaine distance de celui-ci, et qui s'étend du réservoir inférieur (8) à un point situé au niveau ou juste au-dessous des bords (12, 15) de la partie supérieure (7) pour définir le conduit d'écoulement de fluide (11).
